# EUROPÄISCHE PATENTSCHRIFT

(11) **EP 1 515 070 B1**
(45) Veröffentlichungstag und Bekanntmachung des Hinweises auf die Patenterteilung: **02.04.2008**
(21) Anmeldenummer: 04450167.4
(22) Anmeldetag: 01.09.2004
(51) Int. Cl.: F16J 9/16

(54) **Kolbenring**
Piston ring
Segment de piston

(30) Priorität: 10.09.2003 AT 14262003
(43) Veröffentlichungstag der Anmeldung: 16.03.2005
(73) Patentinhaber: Hoerbiger Kompressortechnik Holding GmbH, 1220 Wien (AT)
(72) Erfinder: Edelmann, Wolfgang, 1180 Wien (AT)
(74) Vertreter: Pinter, Rudolf

(56) Entgegenhaltungen:
- DE-A- 10 358 548
- DE-C- 562 858
- GB-A- 278 564
- GB-A- 411 341
- GB-A- 1 222 609
- US-A- 6 045 135
- US-A1- 2003 127 802

## Beschreibung

Die Erfindung betrifft einen Kolbenring, insbesonders für einen Hubkolben-Kompressor für spezifisch leichte Gase, bestehend aus zwei konzentrischen Teilringen mit zumindest je einer Stoßstelle, wobei der erste Teilring einen im wesentlichen L-förmigen Querschnitt mit einem innen in Richtung der Achse verlaufenden ersten Schenkel und einem dazu senkrecht nach außen verlaufenden zweiten Schenkel aufweist, und wobei der zweite Teilring einen im wesentlichen dem im L-förmigen Querschnitt des ersten Teilringes auf ein Rechteck bzw. Quadrat fehlenden Teil entsprechenden Querschnitt aufweist und in den ersten Teilring mit gegenüber dessen Stoßstelle(n) in Umfangsrichtung verdrehter bzw. verdrehten Stoßstelle(n) unter Abdichtung des Spaltes zwischen Kolben und Zylinder eingelegt ist.

Derartige, auch als TWIN-Kolbenring bekannte Bauteile sind seit längerer Zeit (beispielsweise aus GB 1 222 609) bekannt und speziell bei der Verdichtung sehr leichter Gase, wie beispielsweise Wasserstoff, auf einen sehr hohen Enddruck in Verwendung. Um die Lekkage möglichst niedrig zu halten sind dabei Dichtelemente mit einer sehr hohen Dichtwirkung im Einsatz, die bei derartigen TWIN-Kolbenringen in vorteilhafter Weise durch die beschriebene Ineinanderlegung der beiden Teilringe, so dass sich keine durchgängigen Spalte oder Stöße ergeben, erzielbar ist. Speziell bei trockenlaufenden, selbstschmierenden Kunststoffringen stellt der auftretende ungleichförmige Verschleiß der beiden Teilringe jedoch ein Problem dar, da dann die beiden Teilringe nicht mehr vollständig überdecken und Spalte entstehen lassen, durch die insbesonders bei sehr leichten Gasen unter hohem Druck hohe Leckgasmengen strömen, was die Fördermengenrate von derart abgedichteten Trockenlaufkompressoren erheblich verschlechtert. Weiters ist dabei nachteilig, dass vor allem der auf der dichtenden Seite verwendete Rechteckring in den konstruktiv bedingten Spalt zwischen Kolben und Zylinder extrudiert wird.

Um den oben angesprochenen Problemen zu begegnen, ist es beispielsweise aus WO 97/19280 A1 oder EP 1 275 888 A1 bekannt, die Anlagefläche zwischen den beiden Teilringen des TWIN-Kolbenringes so auszugestalten, dass die beiden Teilringe in radialer Richtung formschlüssig gekoppelt sind, sodass ein gleichmäßiger Verschleiß der beiden Teilringe im Betrieb auftritt und dabei die Entstehung von Undichtheiten zwischen den Teilringen möglichst verhindert wird. Nachteilig sind bei dieser Ausbildung von TWIN-Kolbenringen allerdings die relativ komplizierte Gestaltung der im wesentlichen radial gerichteten Anlagefläche zwischen den beiden Teilringen und die sich damit bei Verschmutzung und Abrieb in diesem Bereich wiederum ergebenden Dicht- und Standzeitprobleme.

Aufgabe der vorliegenden Erfindung ist es, einen TWIN-Kolbenring der eingangsgenannten Art so zu verbessern, dass die erwähnten Nachteile der bekannten derartigen Anordnungen vermieden werden, und dass insbesonders auf einfache und betriebssichere Weise eine gleichmäßige Abnutzung der beiden Teilringe bei über die gesamte Standzeit gleichbleibend guter Dichtwirkung auch bei spezifisch leichten Gasen und hohen Verdichtungsenddrücken sichergestellt werden kann.

Diese Aufgabe wird gemäß der vorliegenden Erfindung bei einem Kolbenring der eingangs genannten Art dadurch gelöst, dass der zweite, in den L-förmigen Querschnitt des ersten Teilringes eingelegte Teilring auf der Druckseite des Kolbenringes angeordnet und mit jeweils einer die zugehörige Stoßstelle des ersten Teilringes auf der Druckseite sowie der achsnahen Innenseite in einer in den ersten Teilring eingearbeiteten Nut übergreifenden Nase versehen ist.

Die Erfindung geht damit aus von einer an sich bekannten Verwendung von TWIN-Kolbenringen der eingangs angesprochenen und beispielsweise aus GB 1 222 609 bekannten Art, bei der derartige Ringe als Drosselring verwendet werden, wobei der eingelegte Teilring auf der Druckseite sitzt (der gesamte TWIN-Kolbenring also verkehrt herum eingesetzt wird). Dabei entsteht allerdings eine - in diesem Falle erwünschte - Undichtheit im Bereich der Stoßstelle des L-Ringes, über die bei entsprechend vielen hintereinander angeordneten derartigen Drosselringen ein kontrollierter Druckabbau bzw. eine kontrollierte Aufteilung des abzubauenden Druckes auf alle Ringe möglich ist. Um diese im vorliegenden Verwendungsfalle unerwünschte Undichtheit zu beseitigen ist erfindungsgemäß nun die beschriebene Nase am der Druckseite zugewandten eingelegten Teilring ausgebildet, welche die Stoßstelle des ersten Teilringes druckseitig sowie an der Innenseite übergreift und damit auf einfache Weise die erwähnten Probleme derartiger TWIN-Kolbenringe beseitigt. Die zusammenwirkenden Anlageflächen der beiden Teilringe sind weiterhin einfach ausgebildet und damit auch einfach herzustellen, was die Herstellkosten senkt und trotzdem lange Standzeiten bei gleichbleibend guter Abdichtung bzw. gleichbleibend geringen Leckagen sicherstellt.

In besonders bevorzugter weiterer Ausgestaltung der Erfindung ist vorgesehen, dass der zweite Teilring an seinen Anlageflächen zum ersten Teilring mit Druckausgleichsnuten versehen ist. Der erfindungsgemäße TWIN-Kolbenring arbeitet unter Druckbelastung so, dass der mit L-förmigem Querschnitt versehene erste Teilring den eingelegten zweiten Teilring mitnimmt, womit beide Ringe gleichmäßig verschleißen. Durch die angesprochenen Druckausgleichsnuten am zweiten Teilring wird dieser "druckausgeglichen", womit die Reibung und der Verschleiß insgesamt dem Ringbreiten-Verhältnis entsprechend minimiert wird.

Um zur Verwendung bei höheren Drücken den gemäß der grundsätzlichen Ausführung nach der Erfindung an sich "doppeltwirkenden" TWIN-Kolbenring zu einem "einfachwirkenden" zu machen, können in weiters bevorzugter Ausgestaltung der Erfindung an beiden Teilringen an der druckseitigen Stirnseite im wesentlichen radial ausgerichtete Druckentlastungsnuten angeordnet sein, womit der eingespannte Druck beim Druckwechsel entlastet wird.

Um ungleichmäßigem Verschleiß im Bereich der Nase des zweiten Teilringes vorzubeugen kann in weiters bevorzugter Ausgestaltung der Erfindung in diesem Bereich eine Druckausgleichsbohrung angeordnet werden.

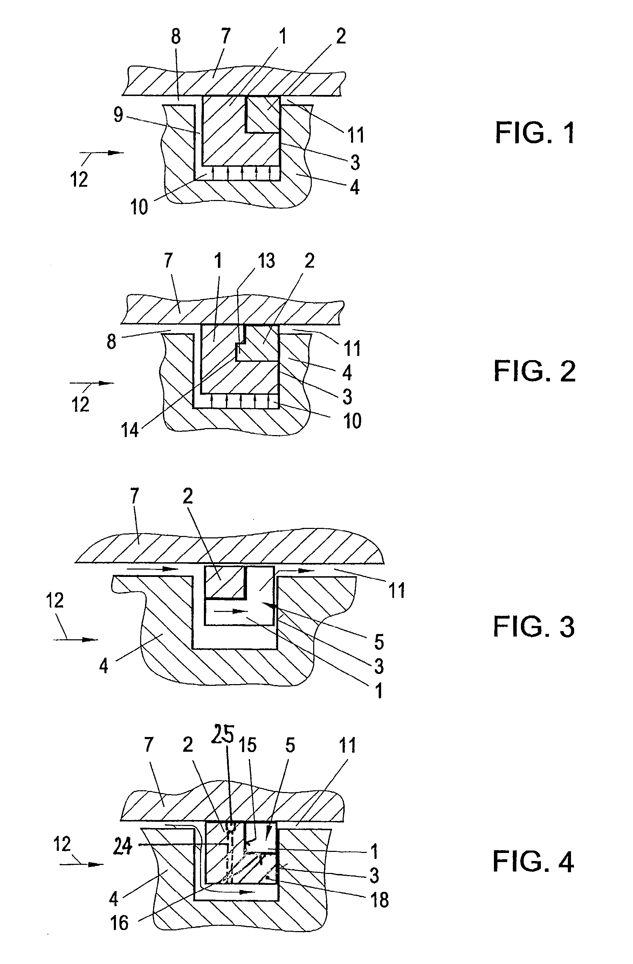

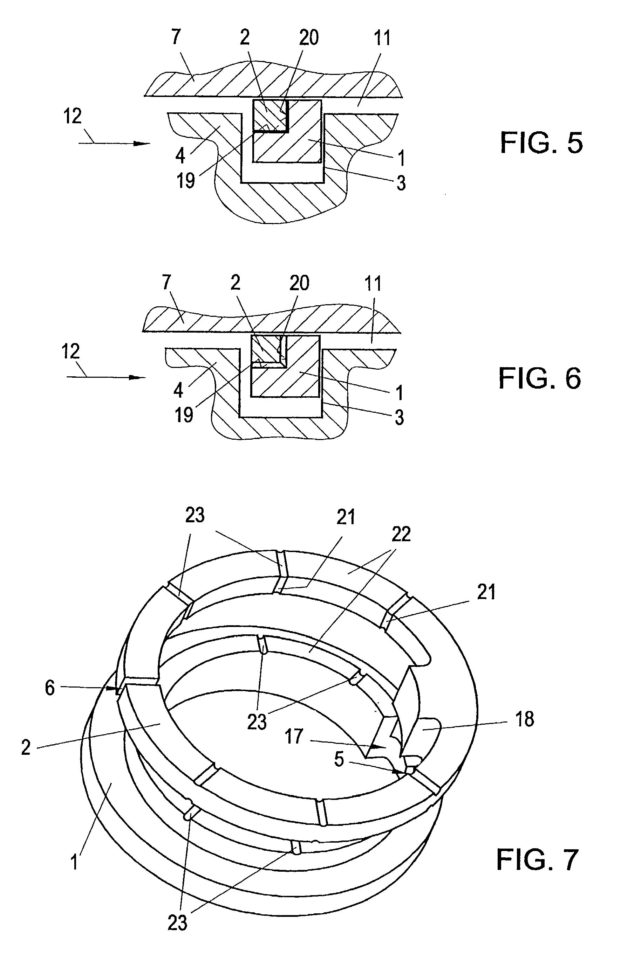

Die Erfindung wird im folgenden noch anhand der in der Zeichnung teilweise schematisch dargestellten Ausführungsbeispiele näher erläutert. Fig. 1 und 2 zeigen dabei schematische Querschnitte eingebauter TWIN-Kolbenringe nach dem bekannten Stand der Technik, Fig. 3 einen schematischen Querschnitt durch einen eingebauten TWIN-Kolbenring gemäß Fig. 1 bei bekannter Verwendung als Drosselring, Fig. 4 einen im wesentlichen der Anordnung nach Fig. 3 entsprechenden Querschnitt durch einen erfindungsgemäßen TWIN-Kolbenring, Fig. 5 und 6 den erfindungsgemäßen Kolbenring aus Fig. 4 einmal mit und einmal ohne Druckausgleich (mit Schnittführung abseits der Stoßstellen) und Fig. 7 eine perspektivische Ansicht einer Ausführungsform eines erfindungsgemäßen Kolbenringes (ähnlich wie in Fig. 4 bis 6 dargestellt) in Explosionsdarstellung.

Fig. 1 zeigt einen TWIN-Kolbenring gemäß beispielsweise aus GB 1 222 609 bekanntem Stande der Technik. Der erste Teilring 1 (L- oder Winkel-Ring) wird zusammen mit dem eingelegten zweiten Teilring 2 in der Nut 3 des Kolbens 4 angeordnet. Beide Teilringe 1, 2 können einteilig (mit einer Stoßstelle 5, 6 gemäß Fig. 7) oder aber - vor allem bei kleinen Kolbendurchmessern bzw. bruchgefährdeten Werkstoffen - zweiteilig ausgeführt sein. Der erste L-förmige Teilring 1 sitzt auf der Druckseite und dichtet mit dem eingelegten zweiten Teilring 2 den Kolben 4 ab. Die beiden Teilringe 1, 2 werden (wie hier nicht dargestellt aber beispielsweise aus der angesprochenen GB 1 222 609 bekannt) durch einen Stift oder eine Nasse gegen Verdrehen gesichert, womit die Stoßstellen jeweils gegenseitig abgedichtet werden. (Es ist zu beachten, dass bei den Darstellungen gemäß Fig. 1 bis 6 die Spalte zwischen den beiden Teilringen 1, 2, ebenso wie die in der Darstellung rechts zwischen den beiden Teilringen 1, 2 und der Wand der Nut 3 sowie die zwischen den beiden Teilringen 1, 2 und dem Zylinder 7 dargestellten Spalte nur zur Illustration bzw. übertrieben groß dargestellt sind)

Aufgrund der von der Druckseite (Pfeil 12) her durch die Spalte 8, 9 und 10 wirkenden Druckbelastung wird der Einlegering (zweiter Teilring 2) insgesamt stärker belastet als der L-Ring (erster Teilring 1) und verschleißt demnach stärker; auch ist der eingelegte zweite Teilring 2 am Spalt 11 zwischen Kolben 4 und Zylinder 7 auf Extrudieren (in den Spalt 11) belastet. Aufgrund dieser Problematik sind bei derartigen bekannten TWIN-Kolbenringen insbesonders bei Verwendung mit kleinen Zylinderdurchmessern und leichten Gasen immer wieder Probleme mit der Standzeit der Kolbenringe festzustellen.

Bei der beispielsweise aus EP 1 275 888 A1 bekannten Ausführung gemäß Fig. 2 greift nun der eingelegte zweite Teilring 2 mittels einer Nase 13 in eine Nut 14 des im wesentlichen wiederum L-förmigen ersten Teilrings 1 ein, womit der Verschleiß weitestgehend gleichmäßig auf beide Teilring 1, 2 aufgeteilt und eine höhere Lebensdauer erreicht wird. Im übrigen bleibt die Funktion des dargestellten Kolbenrings im wesentlichen gleich zu der gemäß Fig. 1.

Fig. 3 zeigt eine bereits bekannte Verwendung von TWIN-Kolbenringen gemäß Fig. 1, wobei nun der eingelegte, zweite Teilring 2 auf der Druckseite (Pfeil 12) sitzt und damit die Stoßstelle 5 des ersten Teilringes 1 (durch welche der Schnitt gemäß Fig. 3 gelegt ist) nicht mehr abdichtet. Bei dieser Verwendung der TWIN-Kolbenringe gemäß Fig. 1 (theoretisch möglich und funktionell gleich könnten so auch TWIN-Kolbenringe gemäß Fig. 2 verwendet werden) als sogenannte Drosselringe entsteht also eine gewünschte Undichtheit zur Ermöglichung eines gleichmäßigen Druckabbaus über mehrere derartige hintereinander angeordnete Kolbenringe. Die Anwendung dieser Einbaulage ist aber stets nur in Sonderfällen sinnvoll, da die Undichtheit über die Stoßstelle 5 des Teilringes 1 schwer zu kalkulieren ist und auf Grund des fortlaufenden Verschleißes sich auch laufend ändert.

Bei der erfindungsgemäßen Ausbildung nach Fig. 4 ist nun der zweite, in den L-förmigen Querschnitt des ersten Teilringes 1 eingelegte Teilring 2 (entsprechend zur Ausbildung nach Fig. 3) auf der Druckseite (Pfeil 12) des Kolbenringes angeordnet und mit jeweils einer die zugehörige Stoßstelle 5 des ersten Teilringes 1 (durch welche auch hier wiederum der Schnitt gemäß Fig. 4 gelegt ist) auf der Druckseite (Berührungsfläche 15) sowie der achsnahen Innenseite (Berührungsfläche 16) in einer in den ersten Teilring 1 eingearbeiteten Nut (siehe Bezugszeichen 17 in Fig. 7) übergreifenden Nase 18 versehen. Auf diese sehr einfache Weise ist nun die Undichtheit an der Stoßstelle 5 des ersten Teilringes 1 (siehe Fig. 3) abgedichtet und der TWIN-Kolbenring gemäß der Erfindung trotz ansonsten einfachem und klassischem Aufbau (ähnlich wie in Fig. 1) dicht. Der erfindungsgemäße Kolbenring arbeitet unter Druckbelastung so, dass der L-förmige erste Teilring 1 den nun aber gegen Extrudieren in den Spalt 11 zwischen Zylinder 7 und Kolben 4 geschützten eingelegten zweiten Teilring 2 mitnimmt, womit beide Teilringe 1, 2 gleichmäßig verschleißen.

Um diesen gleichmäßigen Verschleiß noch zu mindern können an den beiden Anlageflächen 19, 20 zwischen den beiden Teilringen 1, 2, bevorzugt aber am zweiten Teilring 2 in diesen Bereichen - wie auch in Fig. 7 dargestellt - Druckausgleichsnuten 21 vorgesehen sein. Durch diese Nuten 21 wird der eingelegte zweite Teilring 2 "druckausgeglichen", wobei der L-förmige erste Teilring 1 nun den eingelegten zweiten Teilring 2 unter Belastung weiterhin mitnimmt, jedoch die Reibung und somit der Verschleiß dem Ringbreitenverhältnis entsprechend verringert wird.

Dazu ist in Fig. 5 der erfindungsgemäße TWIN-Kolbenring ohne derartigen Druckausgleich dargestellt - der L-förmige erste Teilring 1 wird von der Druckseite her mit Druck belastet, womit sich über die gesamte axiale Breite des ersten Teilrings 1 Reibkraft aufbaut. Der erste Teilring 1 und der zweite Teilring 2 werden von den Reibkräften gleich belastet. Gemäß Fig. 6 sind nun im Bereich der Anlageflächen 19, 20 Druckausgleichsnuten (21 in Fig. 7) vorgesehen. Damit wird der L-förmige erste Teilring 1 von der Druckseite her mit Druck belastet, wobei sich über die Druckausgleichsnuten 21 nun aber vor und hinter dem eingelegten zweiten Teilring 2 der gleiche Druck aufbaut und dieser somit druckausgeglichen ist. Die Reibkräfte und Gegenkräfte heben sich über die Breite des eingelegten zweiten Teilringes auf, wobei damit am L-förmigen ersten Teilring 1 nur die der Reibflächenbreite dieses Teilringes entsprechenden Anpresskräfte für die Reibung wirksam bleiben. Nachdem der L-förmige erste Teilring 1 unter der Wirkung dieser Druckkräfte aber auch auf den eingelegten zweiten Teilring 2 drückt ergibt sich mit reduzierter Reibkraft auf die volle Verschleißfläche ein wesentlich reduzierter Verschleiß.

Um den an sich in der grundsätzlichen Ausführung nach der Erfindung doppelt wirkenden Kolbenring zu einem vor allem für höhere Drücke erwünschten einfachwirkenden zu machen, werden gemäß Fig. 7 an beiden Teilringen 1, 2 an der druckseitigen Stirnseite 22 im wesentlichen radial ausgerichtete Druckentlastungsnuten 23 angeordnet, womit der eingespannte Druck beim Druckwechsel entlastet wird.

Wie nur in Fig. 4 symbolisch strichliert eingezeichnet, kann im Bereich der Nase 18 des zweiten Teilringes 2 auch eine Druckausgleichsbohrung 24 angeordnet werden, mittels welcher ungleichmäßigem Verschleiß im Bereich der Nase 18 vorgebeugt werden kann. In diesem Bereich kann der fast über den gesamten Umfang des TWIN-Kolbenringes gehende Druckausgleich nicht weiter geführt werden, da in dem Überdeckungsbereich eine Verbindung zwischen der Druck- und der abzudichtenden Seite entstehen würde. Dadurch ist im Bereich der Nase 18 kein Druckausgleich wie am restlichen Umfang möglich. Wird nun eine derartige Bohrung 24 wie in der Zeichnung dargestellt, ev. verbunden mit einer Teilnut 25 am Umfang gesetzt, so ergibt sich ein ca. 25%-iger Druckausgleich bezogen auf die Gesamtringbreite.

## Patentansprüche

1. Kolbenring, insbesonders für einen Hubkolben-Kompressor für spezifisch leichte Gase, bestehend aus zwei konzentrischen Teilringen (1, 2) mit zumindest je einer Stoßstelle (5, 6), wobei der erste Teilring (1) einen im wesentlichen L-förmigen Querschnitt mit einem innen in Richtung der Achse verlaufenden ersten Schenkel und einem dazu senkrecht nach außen verlaufenden zweiten Schenkel aufweist, und wobei der zweite Teilring (2) einen im wesentlichen dem im L-förmigen Querschnitt des ersten Teilringes (1) auf ein Rechteck bzw. Quadrat fehlenden Teil entsprechenden Querschnitt aufweist und in den ersten Teilring (1) mit gegenüber dessen Stoßstelle(n) (5) in Umfangsrichtung verdrehter bzw. verdrehten Stoßstelle(n) (6) unter Abdichtung des Spaltes (8, 11) zwischen Kolben (4) und Zylinder (7) eingelegt ist, **dadurch ge-kennzeichnet, dass** der zweite, in den L-förmigen Querschnitt des ersten Teilringes (1) eingelegte Teilring (2) auf der Druckseite (12) des Kolbenringes angeordnet und mit jeweils einer die zugehörige Stoßstelle (5) des ersten Teilringes (1) auf der Druckseite (12, 15) sowie der achsnahen Innenseite (16) in einer in den ersten Teilring (1) eingearbeiteten Nut (17) übergreifenden Nase (18) versehen ist.

2. Kolbenring nach Anspruch 1, **dadurch gekennzeichnet, dass** der zweite Teilring (2) an seinen Anlageflächen (19, 20) zum ersten Teilring (1) mit Druckausgleichsnuten (21) versehen ist.

3. Kolbenring nach Anspruch 1 oder 2, **dadurch gekennzeichnet, dass** an beiden Teilringen (1, 2) an der druckseitigen Stirnseite (22) im wesentlichen radial ausgerichtete Druckentlastungsnuten (23) angeordnet sind.

4. Kolbenring nach einem oder mehreren der Ansprüche 1 bis 3, **dadurch gekennzeichnet, dass** im Bereich der Nase (18) des zweiten Teilringes (2) eine Druckausgleichsbohrung (24) angeordnet ist.

## Claims

1. A piston ring, in particular for a reciprocating-piston compressor for low-density gases, consisting of two concentric part rings (1,2) each having at least one abutment point (5, 6), the first part ring (1) having a substantially L-shaped cross-section with a first arm extending internally in the direction of the axis and a second arm extending outwards perpendicular thereto, and the second part ring (2) having a cross-section corresponding substantially to the portion missing in the L-shaped cross-section of the first part ring (1) to make up to a rectangle or square and being placed in the first part ring (1) with abutment point(s) (6) which is(are) turned in the peripheral direction with respect to the abutment point(s) (5) of said part ring, sealing off the gap (8, 11) between the piston (4) and cylinder (7), **characterised in that** the second part ring (2) placed in the L-shaped cross-section of the first part ring (1) is located on the pressure side (12) of the piston ring and is provided in each case with a projection (18) which extends across the associated abutment point (5) of the first part ring (1) on the pressure side (12, 15) and also the inside (16) close to the axis in a groove (17) machined into the first part ring (1).

2. A piston ring according to Claim 1, **characterised in that** the second part ring (2) is provided with pressure compensation grooves (21) on its contact faces (19, 20) with the first part ring (1).

3. A piston ring according to Claim 1 or 2, **characterised in that** substantially radially oriented pressure relief grooves (23) are located on both part rings (1, 2) on the pressure-side end face (22).

4. A piston ring according to one or more of Claims 1 to 3, **characterised in that** a pressure compensation bore (24) is located in the region of the projection (18) of the second part ring (2).

## Revendications

1. Segment de piston, notamment destiné à un compresseur à piston pour des gaz spécifiques légers, constitué de deux anneaux partiels (1, 2) concentriques présentant chacun au moins une coupe de jointure respective (5, 6), le premier anneau partiel (1) présentant une section transversale sensiblement en forme de L avec une première branche ou aile qui s'étend dans la direction de l'axe et une deuxième branche ou aile qui s'étend perpendiculairement à la précédente en direction de l'extérieur, et le deuxième anneau partiel (2) présentant une section transversale qui correspond sensiblement à la partie manquante pour compléter la section transversale en forme de L du premier anneau partiel (1) en un rectangle ou un carré, et étant placé dans le premier anneau partiel (1) avec sa ou ses coupe(s) de jointure (6) décalée(s) dans la direction périphérique par rapport à la ou les coupe(s) de jointure (5) du premier anneau partiel (1), en assurant l'étanchéité de l'interstice (8, 11) entre le piston (4) et le cylindre (7), **caractérisé en ce que** le deuxième anneau partiel (2) placé dans la section transversale en forme de L du premier anneau partiel (1), est agencé sur le côté pression (12) du segment de piston, et est pourvu d'un talon (18) respectif qui chevauche une coupe de jointure (5) respectivement correspondante du premier anneau partiel (1) sur le côté pression (12, 15) ainsi que sur le côté intérieur (16) proche de l'axe, dans une rainure (17) usinée dans le premier anneau partiel (1).

2. Segment de piston selon la revendication 1, **caractérisé en ce que** le deuxième anneau partiel (2) est pourvu, sur ses surfaces d'appui (19, 20) sur le premier anneau partiel (1), de rainures de compensation de pression (21).

3. Segment de piston selon la revendication 1 ou 2, **caractérisé en ce que** sur les deux anneaux partiels (1, 2) sont agencées, sur la face frontale (22) côté pression, des rainures de détente de pression (23) orientées sensiblement de manière radiale.

4. Segment de piston selon l'une ou plusieurs des revendications 1 à 3, **caractérisé en ce que** dans la zone du talon (18) du deuxième anneau partiel (2), est agencé un perçage de compensation de pression (24).
